# EUROPEAN PATENT SPECIFICATION

(11) **EP 0 937 585 B1**
(45) Date of publication and mention of the grant of the patent: **21.04.2004**
(21) Application number: 99301166.7
(22) Date of filing: 17.02.1999
(51) Int. Cl.: B60B 17/00, H02K 7/14, B60K 7/00

(54) **Wheel arrangement**
Radvorrichtung
Disposition de roue

(30) Priority: 19.02.1998 GB 9803395
(43) Date of publication of application: 25.08.1999
(73) Proprietor: Gabbidon, Willitz Decartered, Derby DE22 3SX (GB); Guy, Wilton Francis, Derby DE22 3SX (GB); Howe, Michael, Derby DE22 3SX (GB)
(72) Inventor: Gibson, David Ronald c/o G.G.S. Engineering, Derby DE22 3SX (GB)
(74) Representative: Skinner, Michael Paul

(56) References cited:
- EP-A- 0 464 929
- EP-A- 0 865 978
- DE-A- 19 501 926
- DE-U- 29 803 665
- FR-A- 2 561 593

## Description

The present invention relates to wheel arrangements and particularly to driven wheels for use for example in rail vehicles, such as trains, trams and the like.

FR 2,561,593 (BRUYANT) discloses an electric motorised wheel for vehicles.

DE 298 03 665 (HEINZMANN) discloses a drive system for wheel chairs using a gearless DC electric motor built into the hub of the wheel.

EP 0 464 929 (ELETTROMECCANICA PARIZZI) discloses a wheel electrical motor assembly for rail and tram vehicles.

DE 195 01 926 (SCHMID) discloses a drive device for an electrically operated vehicle.

EP 0 865 978 (ABB DAIMLER BENZ TRANSPORTATION) discloses a hub drive for a vehicle wheel.

All these documents comprise the features mentioned in the preamble of claim 1.

The present invention provides a wheel arrangement comprising a hub, a wheel rotatable around the hub and an electromagnetic motor, the arrangement being characterised in that the wheel comprises two members, which, in use, hold a tyre in a clamping manner, thereby securing the tyre to the wheel and by the electromagnetic motor having a flux path provided, at least in part, by attachment means acting between the said two members.

Preferably the wheel comprises first and second axially transverse members between which the tyre is clamped.

The attachment means may comprise an intermediate member to which the said two members are attached, the flux path passing through the intermediate member. The intermediate member may provide a circumferential wall of the wheel. The circumferential wall is preferably steel and preferably carries permanent magnets, preferably neodymium magnets. Electromagnetic coils are preferably fixed in proximity with the circumferential wall, which turns with the wheel.

Preferably the transverse members and the intermediate member form between them a generally hollow wheel housing electromagnetic coils of the motor. Preferably the motor is a synchronous motor. The attachment means is preferably located in the vicinity of the radially outer edge of the wheel. Preferably the tyre is steel.

The hub and wheel may be arranged to cooperate to form an electromagnetic motor by which the wheel maybe driven relative to the hub, wherein the motor comprises neodymium permanent magnets.

Preferably the permanent magnets are arranged around the circumference of the wheel.

The hub and wheel may be arranged to cooperate to form an electromagnetic motor by which the wheel may be driven relative to the hub, the arrangement further comprising control means operable to provide to the motor a drive voltage which generally increases as the frequency increases, by a relationship controlled by the control means in dependence on the load and/or speed of the motor.

The arrangement preferably further comprises sensor means operable to provide measurement by which the control means may select the drive voltage. The sensor means are preferably operable to detect the position and/or speed of the rim. The control means is preferably operable to arrange the motor to provide regenerative braking of the wheel..

An embodiment of the present invention will now be described in more detail, by way of example only, and with reference to the accompanying drawings in which:-
Fig. 1 is a view in elevation, partly cut away, of a wheel arrangement according to the present invention; and
Fig. 2 is a simplified, schematic elevation of the arrangement, with one disc of the wheel removed.

The drawing shows a wheel arrangement 10 which comprises a hub indicated generally at 12 and a wheel indicated generally at 14 and rotatable around the hub 12. The hub 12 and wheel 14 are arranged, as will be described, to cooperate to form an electromagnetic motor by which the wheel 14 may be driven relative to the hub 12. This motor includes a flux path which is provided, at least in part, through components of the wheel 14.

In more detail, the arrangement includes a stator indicated generally at 16 and fixed by means of a stator support 17 to an axle 18 to form part of the hub 12. The axle 18 carries the wheel 14 by means of bearings 20. Consequently, the wheel 14 can rotate relative to the axle 18 and relative to the stator 16 as the vehicle moves. The axle 18 may be mounted at 22 to the vehicle in any convenient manner, such as by means of a suspension unit or the like.

It can be seen from the drawing, that the stator 16 is enclosed within the wheel 14. The wheel 14 is formed by two generally disc-like members 14A which extend transversely from the axle 18 and are attached together by a steel circumferential wall portion 14B which is in the form of a hoop and to which the discs 14A are attached by means of bolts or other appropriate fixings. The circumference 24 of the wheel 14 carries a tyre such as a steel tyre 26. The tyre 26 is clamped between the discs 14A by virtue of the attachment provided by the hoop 14B. A rubber isolator 28 may be provided to absorb vibration and limit noise, and shims 29 allow the tyre 26 to be centred on the wheel 14. The tyre 26 has a profile appropriate for a rail vehicle such as a train or tram, including a flange 30, but other profiles could be used according to the intended application of the wheel arrangement 10.

The steel hoop 14B also carries a line of permanent magnets 34 distributed evenly around the region 32 and bonded thereto. There may be 42 or more permanent magnets 34 in a typical arrangement (of radius approximately 300mm) and the magnets are preferably closely spaced, such as a few millimetres apart. The permanent magnets 34 are installed with a north or south face facing the rotation axis of the wheel 14 (the central axis of the axle 18) and each with the opposite orientation to its neighbour so that the rim 14 alternately provides north and south poles around its circumference.

The permanent magnets 34 are preferably based on a rare earth material, such a neodymium, which has high permanent energy. Magnet strengths in the region of 0.8 Tesla or 0.9 Tesla are commercially available. Preferably, the magnets 34 are at as great a radius as possible within other constraints, for reasons which will become apparent.

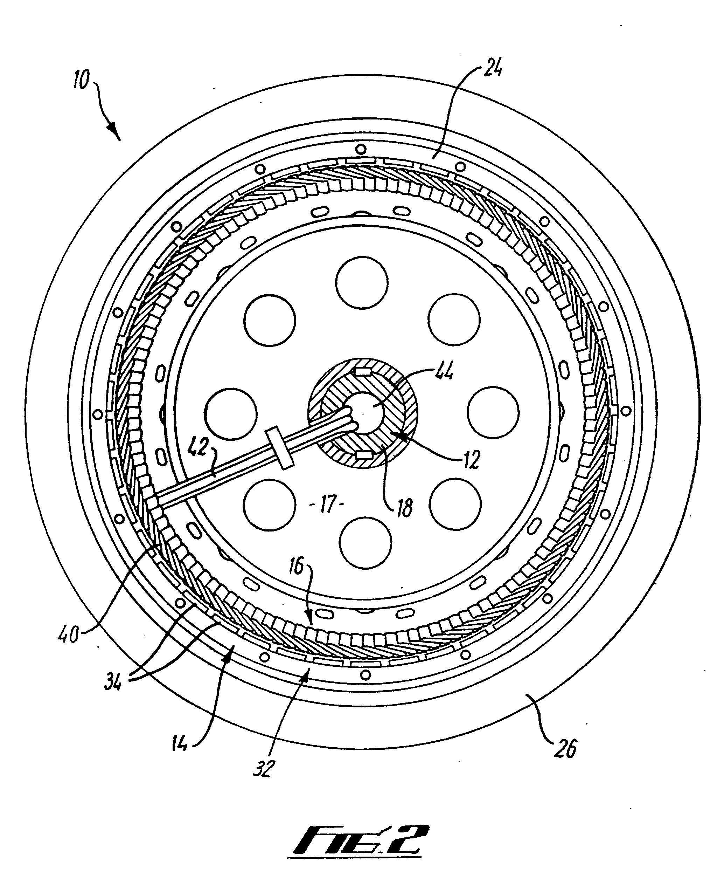

The stator 16 and its support 17 can now be described in more detail, particularly with reference to Fig. 2.

The support 17 consists of a hollow disc or ring of arms fixed to the axle 18. The circumference of the support 17 carries a ring of laminated electrical steel formed to accommodate magnetic coil windings 40. The windings 40 are powered through cable 42 which passes down to the axle 18 through to a central bore 44 in the axle 18 and then to an appropriate power supply 46.

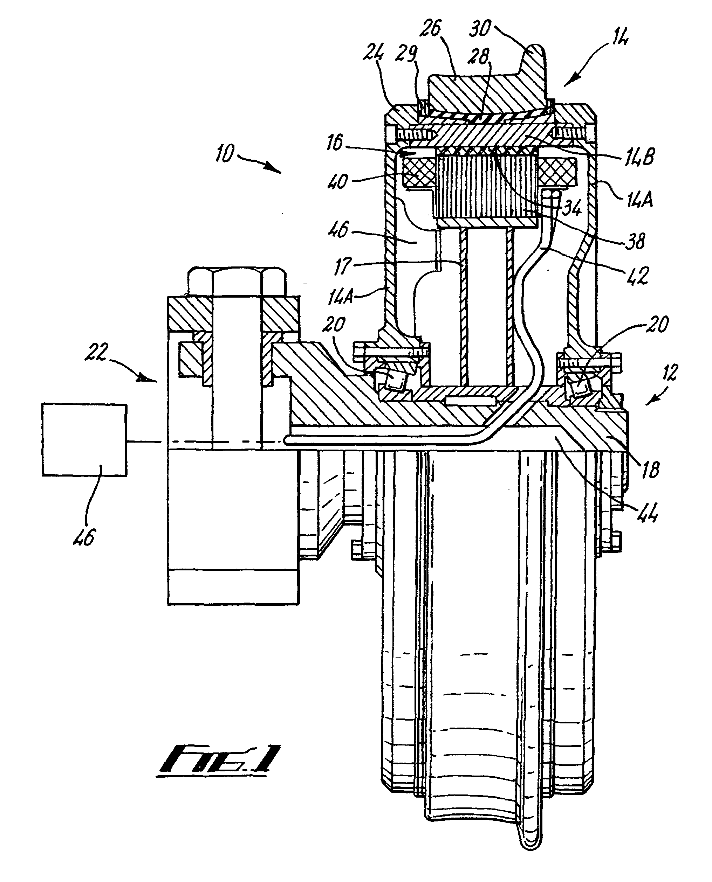

The dimensions of the stator 16 are chosen, as can be seen from Fig. 1, to leave a minimal separation between the blocks 38 and magnets 34 in the interests of efficient magnetic coupling between the two.

The number of windings 40 is three times the number of permanent magnets 34, to create a synchronous motor when the windings are fed with a 3-phase A.C. power supply. The magnetic flux created in the windings 40 will couple through the permanent magnets 34 to enter the hoop 14B, passing along the hoop to leave at the next winding fed by the same supply phase. The return flux path then passes through the stator.

Using the hoop 14B in this dual manner, to assist clamping of the tyre 26 and also to provide the flux path for the motor, allows the synchronous motor to be built at a large radius from the axle 18, thereby optimising the torque which the motor can provide.

In use, power is supplied to each winding 40 in the form of a sinusoidal supply. A three phase supply is used with each successive winding 40 being driven by a successive phase so that the first and fourth windings are powered by the first phase, the second and fifth windings are powered by the second phase, and the third and sixth windings are powered by the third phase. The oscillating nature of the supply gives rise, in effect, to a magnetic flux pattern which turns around the axle 18 and which the magnets 34 will seek to follow, thereby causing the wheel 14 to turn around the axle 18.

The three phase supply to the windings 40 will be controlled by an appropriate control circuit within the power supply 46. The speed of rotation of the wheel 14 will be set by the frequency of the supply. The voltage required to turn the wheel varies with the frequency. The voltage generally rises with frequency, but the relationship is not simple. In particular, the voltage required is higher than direct proportionality at low frequencies, and will vary from direct proportionality across the profile of possible load and speed conditions. It is also important to ensure that under any particular conditions, the voltage supplied is adequate to cause rotation, not just to cause heating within the wheel. The control circuit within the power supply 46 monitors the operation of the wheel, particularly the supply frequency and voltage, and adjusts the voltage according to a profile obtained by measurement or calculation to provide optimum operation. Sensors may be provided to measure wheel speed and direction.

The control arrangement preferably also allow reverse connection of the windings when the vehicle is in motion, to provide regenerative braking. It is envisaged that as much as 50% of the expended energy could be recovered in this manner. In addition, mechanical brakes would only be required to hold the wheel when stationary, or as a safety back-up, thus reducing wear and maintenance.

Various modifications can be made to the apparatus described above, without departing from the scope of the invention. In particular, the details of the geometry of the stator coils and laminations, and of the hub and magnets in the rotor region can all be varied according to torque requirements, materials used, supply arrangements and the like. Many different materials could be used according to the requirements of weight, magnetic behaviour and strength. Many of the surfaces, particularly outer surfaces of the arrangement, could be covered with a resilient material, preferably rubber, in the interests of noise reduction, vibration reduction etc.

The motor described above can be used with a multi-wheeled vehicle having independent drive arrangemens for each wheel, as described in our co-pending U.K. Patent Application No. 9724964.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A wheel arrangement (10) comprising a hub (12), a wheel (14) rotatable around the hub (12) and an electromagnetic motor, the arrangement being **characterised in that** the wheel comprises
two members (14A), which, in use, hold a tyre (26) in a clamping manner, thereby securing the tyre (26) to the wheel (14) and by the electromagnetic motor having a flux path provided, at least in part, by attachment means acting between the said two members (14A).

2. An arrangement (10) according to claim 1, **characterised in that** the wheel (14) comprises first and second axially transverse members (14A) between which the tyre (26) is clamped.

3. An arrangement (10) according to claim 1 or 2, **characterised in that** the attachment means comprises an intermediate member (14B) to which the said two members (14A) are attached, the flux path passing through the intermediate member (14B).

4. An arrangement (10) according to claim 3, **characterised in that** the intermediate member (14B) provides a circumferential wall of the wheel (14).

5. An arrangement (10) according to claim 4, **characterised in that** the circumferential wall is steel.

6. An arrangement according to claim 4 and 5, **characterised in that** the circumferential wall carries permanent magnets (34).

7. An arrangement according to claim 6, **characterised in that** the magnets (34) are neodymium magnets.

8. An arrangement (10) according to any of claims 4 to 7, **characterised in that** electromagnetic coils (40) are fixed in proximity with the circumferential wall, which turns with the wheel (14).

9. An arrangement (10) according to claim 3 when dependent on claim 2, **characterised in that** the transverse members (14A) and the intermediate member (14B) form between them a generally hollow wheel housing electromagnetic coils (40) of the motor.

10. An arrangement (10) according to claim 9, **characterised in that** the motor is a synchronous motor.

11. An arrangement (10) according to claim 9 or io, **characterised in that** the attachment means is located in the vicinity of the radially outer edge of the wheel (14).

12. An arrangement (10) according to any preceding claim, **characterised in that** the tyre (26) is steel.

13. An arrangement (10) according to any preceding claim, further **characterised by** comprising control means (46) operable to provide to the motor a drive voltage which generally increases as the frequency increases, by a relationship controlled by the control means (46) in dependence on the load and/or speed of the motor.

14. A wheel arrangement as claimed in any preceding claim, **characterised in that** the hub (12) and wheel (14) are arranged to cooperate to form an electromagnetic motor by which the wheel (14) may be driven relative to the hub (12), and wherein the motor comprises neodymium permanent magnets (34).

15. An arrangement according to claim 14, **characterised in that** the permanent magnets (34) are arranged around the circumference of the wheel (14).

16. A wheel arrangement (10) as claimed in any preceding claim, **characterised in that** the hub (12) and wheel (14) are arranged to cooperate to form an electromagnetic motor by which the wheel (14) may be driven relative to the hub (12), the arrangement (10) further comprising control means (46) operable to provide to the motor a drive voltage which generally increases as the frequency increases, by a relationship controlled by the control means (46) in dependence on the load and/or speed of the motor.

17. An arrangement (10) according to claim 16, further **characterised by** comprising sensor means operable to provide measurement by which the control means (46) may select the drive voltage.

18. An arrangement (10) according to claim 17, **characterised in that** the sensor means are operable to detect the position and/or speed of the rim.

19. An arrangement according to claim 17 or 18, **characterised in that** the control means (46) is operable to arrange the motor to provide regenerative braking of the wheel (14).

## Patentansprüche

1. Rad-Anordnung (10) enthaltend eine Nabe (12), ein um die Nabe (12) drehbares Rad (14) und einen elektromagnetischen Motor, **dadurch gekennzeichnet, dass** das Rad zwei Teile (14A) enthält, die bei Gebrauch einen Reifen (26) klammerartig halten, wobei sie den Reifen (26) am Rad befestigen, und dass der elektromagnetische Motor einen Fluss-Pfad aufweist, der zumindest teilweise durch zwischen den beiden Teilen wirkende (14A) Befestigungsmittel bereitgestellt wird.

2. Anordnung (10) nach Anspruch 1, **dadurch gekennzeichnet, dass** das Rad (14) erste und zweite axial quer verlaufende Teile (14A) aufweist, zwischen denen das Rad (14) geklemmt ist.

3. Anordnung (10) nach Anspruch 1 oder 2, **dadurch gekennzeichnet, dass** das Befestigungsmittel ein Zwischenteil (14B) enthält, an dem die beiden Teile (14A) befestigt sind, wobei der Fluss-Pfad durch das Zwischenteil (14B) verläuft.

4. Anordnung (10) nach Anspruch 3, **dadurch gekennzeichnet, dass** das Zwischenteil (14B) eine Umfangswandung des Rads (14) bildet.

5. Anordnung (10) nach Anspruch 4, **dadurch gekennzeichnet, dass** die Umfangswandung aus Stahl ist.

6. Anordnung nach Anspruch 4 und 5, **dadurch gekennzeichnet, dass** die Umfangswandung Permanent-Magnete (34) trägt.

7. Anordnung nach Anspruch 6, **dadurch gekennzeichnet, dass** die Magnete (34) Neodym-Magnete sind.

8. Anordnung (10) nach einem der Ansprüche 4 bis 7, **dadurch gekennzeichnet, dass** elektromagnetische Spulen (40) in der Nähe der Umfangswandung befestigt sind, die sich mit dem Rad (14) dreht.

9. Anordnung (10) nach Anspruch 3 in Verbindung mit Anspruch 2, **dadurch gekennzeichnet, dass** die quer verlaufenden Teile (14A) und das Zwischenteil (14B) ein dazwischenliegendes, im wesentlichen hohles Rad, in dem elektromagnetische Spulen (40) des Motors untergebracht sind.

10. Anordnung (10) nach Anspruch 9, **dadurch gekennzeichnet, dass** der Motor ein Synchron-Motor ist.

11. Anordnung (10) nach Anspruch 9 oder 10, **dadurch gekennzeichnet, dass** das Befestigungsmittel in der Nähe des radial äußeren Randes des Rads (14) angeordnet ist.

12. Anordnung (10) nach einem der vorhergehenden Ansprüche, **dadurch gekennzeichnet, dass** der Reifen (26) aus Stahl ist.

13. Anordnung (10) nach einem der vorhergehenden Ansprüche, ferner **dadurch gekennzeichnet, dass** sie Steuermittel (46) aufweist, die dazu ausgestaltet sind, für den Motor eine Antriebsspannung bereitzustellen, die im Allgemeinen mit der Frequenz in einem durch die Steuermittel (46) kontrollierten Verhältnis in Abhängigkeit von der Belastung und/oder der Geschwindigkeit des Motors ansteigt.

14. Rad-Anordnung (10) nach einem der vorhergehenden Ansprüche, **dadurch gekennzeichnet, dass** die Nabe (12) und das Rad (14) dazu ausgestaltet sind, zusammenzuwirken, um einen elektromagnetischen Motor zu bilden, bei dem das Rad (14) relativ zu der Nabe (12) angetrieben werden kann, und wobei der Motor Neodym-Permanent-Magnete (34) enthält.

15. Anordnung nach Anspruch 14, **dadurch gekennzeichnet, dass** die Permanent-Magnete (34) um den Umfang des Rads (14) herum angeordnet sind.

16. Rad-Anordnung (10) nach einem der vorhergehenden Ansprüche, **dadurch gekennzeichnet, dass** die Nabe (12) und das Rad (14) dazu ausgestaltet sind, zusammenzuwirken, um einen elektromagnetischen Motor zu bilden, bei dem das Rad (14) relativ zu der Nabe (12) angetrieben werden kann, wobei die Anordnung (10) ferner Steuermittel (46) aufweist, die dazu ausgestaltet sind, für den Motor eine Antriebsspannung bereitzustellen, die im Allgemeinen mit der Frequenz in einem durch die Steuermittel (46) kontrollierten Verhältnis in Abhängigkeit von der Belastung und/oder der Geschwindigkeit des Motors ansteigt.

17. Anordnung (10) nach Anspruch 16, **dadurch gekennzeichnet, dass** sie Sensormittel für Messungen aufweist, anhand derer die Steuermittel (46) die Antriebsspannung auswählen können.

18. Anordnung (10) nach Anspruch 17, **dadurch gekennzeichnet, dass** die Sensormittel zur Ermittlung der Position und/oder der Geschwindigkeit der Felge ausgestaltet sind.

19. Anordnung nach Anspruch 17 oder 18, **dadurch gekennzeichnet, dass** die Steuermittel (46) zur Ansteuerung des Motors als Rückgewinnungsbremse des Rads (14) ausgestaltet sind.

## Revendications

1. Agencement de roue (10) comprenant un moyeu (12), une roue (14) capable de tourner autour du moyeu (12) et un moteur électromagnétique, l'agencement étant **caractérisé en ce que** la roue comprend :
deux éléments (14A), qui, en fonctionnement, maintiennent un pneu (26) par serrage, fixant de ce fait le pneu (26) à la roue (14) et par le moteur électromagnétique ayant un trajet de flux réalisé, au moins en partie, par des moyens de fixation agissant entre lesdits deux éléments (14A).

2. Agencement (10) selon la revendication 1, **caractérisé en ce que** la roue (14) comprend des premier et deuxième éléments axialement transversaux (14A) entre lesquels le pneu (26) est serré.

3. Agencement (10) selon la revendication 1 ou 2, **caractérisé en ce que** les moyens de fixation comprennent un élément intermédiaire (14B) auquel lesdits deux éléments (14A) sont fixés, le trajet de flux passant à travers l'élément intermédiaire (14B).

4. Agencement (10) selon la revendication 3, **caractérisé en ce que** l'élément intermédiaire (14B) réalise une paroi circonférentielle de la roue (14).

5. Agencement (10) selon la revendication 4, **caractérisé en ce que** la paroi circonférentielle est en acier.

6. Agencement selon les revendications 4 et 5, **caractérisé en ce que** la paroi circonférentielle porte des aimants permanents (34).

7. Agencement selon la revendication 6, **caractérisé en ce que** les aimants (34) sont des aimants en néodyme.

8. Agencement (10) selon l'une quelconque des revendications 4 à 7, **caractérisé en ce que** des bobines électromagnétiques (40) sont fixées à proximité de la paroi circonférentielle, laquelle tourne avec la roue (14).

9. Agencement (10) selon la revendication 3 lorsqu'elle dépend de la revendication 2, **caractérisé en ce que** les éléments transversaux (14A) et l'élément intermédiaire (14B) forment entre eux une roue généralement creuse logeant les bobines électromagnétiques (40) du moteur.

10. Agencement (10) selon la revendication 9, **caractérisé en ce que** le moteur est un moteur synchrone.

11. Agencement (10) selon la revendication 9 ou 10, **caractérisé en ce que** les moyens de fixation sont situés à proximité du bord radialement extérieur de la roue (14).

12. Agencement (10) selon l'une quelconque des revendications précédentes, **caractérisé en ce que** le pneu (26) est en acier.

13. Agencement (10) selon l'une quelconque des revendications précédentes, **caractérisé en outre par le fait qu'**il comprend des moyens de commande (46) qui peuvent être mis en oeuvre pour appliquer au moteur une tension de commande qui augmente généralement lorsque la fréquence augmente, par une relation commandée par les moyens de commande (46) en fonction de la charge et/ou de la vitesse du moteur.

14. Agencement de roue selon l'une quelconque des revendications précédentes, **caractérisé en ce que** le moyeu (12) et la roue (14) sont agencée pour coopérer afin de former un moteur électromagnétique par lequel la roue (14) peut être entraînée par rapport au moyeu (12), et dans lequel le moteur comprend des aimants permanents en néodyme (34).

15. Agencement selon la revendication 14, **caractérisé en ce que** les aimants permanents (34) sont agencés autour de la circonférence de la roue (14).

16. Agencement de roue (10) selon l'une quelconque des revendications précédentes, **caractérisé en ce que** le moyeu (12) et la roue (14) sont agencés pour coopérer afin de former un moteur électromagnétique par lequel la roue (14) peut être entraînée par rapport au moyeu (12), l'agencement (10) comprenant en outre des moyens de commande (46) qui peuvent être mis en oeuvre pour appliquer au moteur une tension de commande qui augmente généralement lorsque la fréquence augmente, par une relation commandée par les moyens de commande (46) en fonction de la charge et/ou de la vitesse du moteur.

17. Agencement (10) selon la revendication 16, **caractérisé en outre par le fait qu'**il comprend des moyens formant capteur qui peuvent être mis en oeuvre pour réaliser une mesure par laquelle les moyens de commande (46) peuvent sélectionner la tension de commande.

18. Agencement (10) selon la revendication 17, **caractérisé en ce que** les moyens formant capteur peuvent être mis en oeuvre pour détecter la position et/ou la vitesse de la jante.

19. Agencement selon la revendication 17 ou 18, **caractérisé en ce que** les moyens de commande (46) peuvent être mis en oeuvre pour faire en sorte que le moteur réalise un freinage de la roue (14) par récupération.
